# EUROPÄISCHE PATENTANMELDUNG

(11) **EP 4 804 298 A1**
(43) Veröffentlichungstag der Anmeldung: **09.09.2026**
(21) Anmeldenummer: 26159517.7
(22) Anmeldetag: 19.02.2026
(51) Int. Cl.: H01M 50/103, H01M 50/124, H01M 50/474, H01M 50/588

(54) **QUADERFÖRMIGE BATTERIEZELLE FÜR EINE TRAKTIONSBATTERIE EINES KRAFTFAHRZEUGES, BATTERIEZELLENANORDNUNG SOWIE VERFAHREN ZUR HERSTELLUNG EINER SOLCHEN BATTERIEZELLE**

(30) Priorität: 06.03.2025 DE 102025108569
(71) Anmelder: Volkswagen Aktiengesellschaft, 38440 Wolfsburg (DE)
(72) Erfinder: Meister, Paul, 38440 Wolfsburg (DE); Wrzuszczak, Piotr, 38440 Wolfsburg (DE); Kolschefsky, Lukas, 38440 Wolfsburg (DE); Brodhun, Julian, 38440 Wolfsburg (DE)

(57) **Zusammenfassung**

Die Erfindung betrifft eine Batteriezelle (10) mit einem quaderförmigen Gehäusegrundkörper (12), welcher sechs Seitenflächen (14, 16, 18, 20, 22, 24) aufweist. Zwei bis vier Seitenflächen (14, 16, 18, 20) der sechs Seitenflächen (14, 16, 18, 20, 22, 24) des Gehäusegrundkörpers (12) sind zumindest überwiegend mit einer Isolationsschicht (I) versehen, während mindestens zwei Seitenflächen (18, 20) der sechs Seitenflächen (14, 16, 18, 20, 22, 24) des Gehäusegrundkörpers (12) überwiegend unisoliert sind.

## Beschreibung

Die Erfindung betrifft eine quaderförmige Batteriezelle für eine Traktionsbatterie eines Kraftfahrzeuges, eine Batteriezellenanordnung sowie ein Verfahren zur Herstellung einer solchen Batteriezelle.

Erfindungsgemäße Batteriezellen weisen üblicherweise eine Spannung zwischen 1 V und 10 V auf, insbesondere eine Spannung zwischen 1 V und 5 V, bevorzugt zwischen 2,5 V und 5 V.

Unter einer Traktionsbatterie eines Kraftfahrzeuges im Sinne der Erfindung werden insbesondere Akkumulatoren bestehend aus Batteriezellen verstanden, die derart miteinander verschaltet sind, dass sich eine Systemspannung von mindestens 200 V ergibt, weiter vorzugsweise mindestens 300 V, weiter bevorzugt mindestens 400 V, mindestens 600 V, mindestens 800 V oder sogar mindestens 1.000 V oder mindestens 1.200 V.

Bei den Batteriezellen handelt es sich um quaderförmige Zellen, die in einem formstabilen Gehäusekörper angeordnet sind. Diese Batteriezellen weisen üblicherweise zwei an die Außenseite des Gehäusekörper geführte Pole auf. Die Pole sind entweder beide an der gleichen Gehäuseseite angeordnet oder auf zwei unterschiedlichen Gehäuseseiten des Gehäusekörpers, beispielsweise auf gegenüberliegenden Gehäuseseiten des Gehäusekörpers.

Der Gehäusekörper einer erfindungsgemäßen Batteriezelle ist insbesondere aus einem metallischen Werkstoff hergestellt, insbesondere aus Stahl oder aus Aluminium.

Aus DE 10 2009 035 460 A1 ist eine Batterie mit einer Vielzahl von Batterieeinzelzellen bekannt, deren Batterieeinzelzellen in einer bipoloaren Flachbauweise realisiert sind. Die Batterieeinzelzellen bestehen aus einem isolierenden Rahmen sowie zwei elektrisch leitenden Hüllblechen. Die Batterie weist mindestens einen Zellenstapel auf, der durch hintereinander angeordnete Batterieeinzelzellen gebildet ist. Dabei ist wenigstens an einer Stelle zwischen zwei benachbarten Batterieeinzelzellen ein elastisches Material in einem unverspannten oder teilverspannten Zustand des Zellenstapels mit einer solchen Dicke angeordnet, dass es die beiden Batterieeinzelzellen elektrisch voneinander trennt. Durch Verspannen des Zellenstapels ist das elektrisch isolierende Material so weit zusammenpressbar, dass die beiden Batterieeinzelzellen kontaktiert sind. Eine außenseitige Isolierung der Batterieeinzelzellen ist offenbart und auch nicht im Detail beschrieben.

Aus DE 10 2021 214 118 A1 sind eine Akkumulator-Einheit und ein Verfahren zur Herstellung einer Akkumulator-Einheit bekannt. Die Akkumulator-Einheit weist ein Einheit-Gehäuse und mehrere in dem Einheit-Gehäuse angeordnete Akkumulator-Zellen auf, wobei zumindest eine dieser Akkumulator-Zellen ein Zell-Gehäuse aufweist, die in einem Abschnitt eine Krümmung aufweist, wobei in diesem Abschnitt an der Zell-Wandung ein Unterstützungs-Element angeordnet ist und wobei ein Zwischenraum zwischen diesem Zell-Gehäuse und dem Einheit-Gehäuse mit einem Lücken-Füller ausgefüllt ist. Abgesehen von der Möglichkeit, dass das Unterstützungs-Element aus einem elektrisch nicht leitfähigen Material gebildet sein kann, ist eine außenseitige Isolierung der Batterieeinzelzellen nicht im Detail beschrieben.

Aus der Praxis sind ferner Batteriezellen für eine Traktionsbatterie eines Kraftfahrzeuges bekannt, die im Bereich der Außenseiten des Gehäuses vollflächig umwickelt oder vollflächig mit einer elektrisch isolierenden Beschichtung versehen sind.

Der Erfindung liegt die Aufgabe zugrunde, eine Batteriezelle für eine Traktionsbatterie eines Kraftfahrzeuges sowie ein Verfahren zur Herstellung einer solchen Batteriezelle, welche eine günstige Herstellung ermöglichen, anzugeben.

Die Lösung der Aufgabe erfolgt erfindungsgemäß mit den Merkmalen der unabhängigen Ansprüche. Weitere praktische Ausführungsformen und Vorteile der Erfindung sind in Verbindung mit den abhängigen Ansprüchen beschrieben.

Eine erfindungsgemäße Batteriezelle weist einen quaderförmigen Gehäusegrundkörper auf, welcher sechs Seitenflächen aufweist. Dabei sind zwei bis vier Seitenflächen des Gehäusegrundkörpers überwiegend mit einer Isolationsschicht versehen, während mindestens zwei der Seitenflächen überwiegend unisoliert sind. Die Erfindung sieht insoweit vor, lediglich eine Teilisolation des Gehäusegrundkörpers vorzunehmen und den Gehäusegrundkörper unisoliert zu lassen, soweit eine Isolation nicht erforderlich ist oder eine Isolation später in einer Batteriezellenanordnung mittels anderer Elemente realisiert werden kann. Dadurch können Beschichtungsmaterialien eingespart werden. Dementsprechend kann eine erfindungsgemäße Batteriezelle insgesamt günstig hergestellt werden.

Mit "überwiegend" im Sinne der Erfindung ist ein Flächenanteil von mehr als 50 Prozent gemeint, wobei sich der Flächenanteil auf diejenige Flächen bezieht, welche nicht offensichtlich unisoliert bleiben müssen, wie beispielsweise elektrisch leitfähige Polflächen. Vorzugsweise ist mit überwiegend ein Flächenanteil von mindestens 60 Prozent, weiter bevorzugt mindestens 70 Prozent oder mindestens 75 Prozent und besonders bevorzugt ein Flächenanteil von mindestens 80 Prozent, mindestens 90 Prozent oder mindestens 95 Prozent gemeint. Eine zumindest überwiegend mit einer Eigenschaft (z.B. Schutzschicht, unisoliert) versehene Seitenfläche kann auch vollständig entsprechend ausgebildet sein, d.h. zu 100 Prozent die entsprechende Eigenschaft aufweisen.

In einer praktischen Ausführungsform einer erfindungsgemäßen Batteriezelle sind an einer oder zwei Seitenfläche(n) des Gehäusegrundkörpers Polflächen angeordnet und zwei andere Seitenflächen, insbesondere gegenüberliegend an dem Gehäusekörper angeordnete Seitenflächen, sind mit einer Isolationsschicht versehen. Dies gilt insbesondere für Gehäusegrundkörper, an denen an zwei gegenüberliegenden Seitenflächen Polflächen angeordnet sind und die an zwei weiteren gegenüberliegenden Seitenflächen, an denen keine Polflächen angeordnet sind, eine Isolationsschicht aufweisen.

An Seitenflächen mit daran vorgesehenen Polflächen gilt eine optionale Isolationsschicht auch dann als vollflächige Beschichtung, wenn die verbleibende Rest-Seitenfläche vollständig mit einer Isolationsschicht versehen ist.

Eine Isolation an Seitenflächen mit daran vorgesehenen Polflächen kann optional oder in Ergänzung zu einer Isolationsschicht auch mit anderen Abdeckelementen erfolgen, insbesondere mit Kunststoffabdeckungen.

In einer weiteren praktischen Ausführungsform einer erfindungsgemäßen Batteriezelle sind vier aneinander angrenzende Seitenflächen, an denen zumindest überwiegend eine Isolationsschicht vorgesehen ist, entlang eines Flächen-Umfangs des Gehäusegrundkörpers vorgesehen. In diesem Fall kann eine besonders einfache Herstellung erfolgen, insbesondere wenn die Isolationsschicht durch eine Isolationsfolie oder durch ein Tauchverfahren erzeugt wird. Im Falle einer Isolationsfolie kann in diesem Fall ein Umwickeln in einem Schritt erfolgen, indem der Gehäusegrundkörper von einem zugeschnittenen Streifen einer Isolationsfolie umklebt wird. Im Falle eines Tauchverfahrens können jeweils die Seitenflächen, welche vollständig oder zumindest teilweise mit einer Isolationsschicht versehen werden sollen, dadurch erzeugt werden, dass die vier mit einer Isolationsschicht zu versehenden Seiten nacheinander in eine entsprechende Isolationsbeschichtung in Form eines Lacks eingetaucht werden.

Alternativ oder in Ergänzung zum Tauchverfahren können eine Isolationsschicht oder mehrere Isolationsschichten auch durch Aufsprühen oder anderweitiges Auftragen eines Lacks erzeugt werden.

Um eine Vollisolation des Gehäusegrundkörpers in einer späteren Batteriezellen-Anordnung zu erreichen, ist es bevorzugt, wenn an den weitgehend unisolierten Flächen mindestens zwei außenseitig angeordnete Streifen mit einer Isolationsschicht versehen sind. Unter außenseitig angeordneten Streifen sind Flächen gemeint, die sich von dem Außenumfang einer Seitenfläche des Gehäusegrundkörpers in Richtung Mitte der Seitenfläche erstrecken. Vorzugsweise sind drei oder sogar vier außenseitig angeordnete Streifen mit einer entsprechenden Isolationsschicht versehen, wobei im Falle von vier außenseitig angeordneten Streifen, die sich jeweils über die gesamte Kantenlänge der entsprechenden Seitenfläche erstrecken, ein umlaufender Streifen entlang des Außenumfangs einer Fläche vorgesehen ist. Ein solcher umlaufender Streifen hat den Vorteil, dass sich bei einer späteren Anordnung eines Zellzwischenmaterial-Flächenelements an einer solchen Fläche eine Überlappung ergibt, mit welcher ein Überspringen von Spannungen zwischen zwei Zellen oder zwischen einer Zelle und einem elektrisch leitenden angrenzenden Element, insbesondere einer Spannplatte oder einem die Batteriezellen umgebenden Gehäuse, verhindert werden kann. Vorzugsweise ist eine derartige Überlappung derart ausgelegt, dass eine Durchschlagsfestigkeit von mindestens drei kV gewährleistet ist, bevorzugt mindestens vier kV und weiter bevorzugt mindestens 5 kV.

In einer weiteren praktischen Ausführungsform einer erfindungsgemäßen Batteriezelle weist mindestens eine Isolationsschicht einen Isolations-Ausschnitt auf. In diesem Zusammenhang wird insbesondere auf einen oder mehrere Ausschnitt(e) für ein Berstelement, einen oder mehrere Ausschnitt(e) für Klebeflächen, einen oder mehrere Ausschnitt(e) für Polflächen verwiesen. Unter derartigen Ausschnitten sind auch unbeschichtete Bereiche zu verstehen, sofern die Isolationsschicht durch einen Lack oder eine pulverbeschichtete Oberfläche erzeugt ist. Solche unbeschichteten Bereiche können insbesondere dadurch erzeugt werden, dass diese während der Lackierung oder Beschichtung mit einem Abdeckelement abgedeckt werden und das jeweilige Abdeckelement anschließend wieder entfernt wird.

Die Erfindung betrifft auch eine Batteriezellenanordnung mit einer wie vorstehend beschriebenen Batteriezelle, wobei unmittelbar an eine überwiegend unisolierte Seitenfläche angrenzend ein Zellzwischenmaterial-Flächenelement aus einem isolierenden Zellzwischenmaterial derart angeordnet ist, dass die weitgehend unisolierte Seitenfläche von dem Zellzwischenmaterial-Flächenelement vollständig überdeckt ist und/oder es einen Überlappungsbereich zwischen einer an der Seitenfläche angeordneten Isolationsschicht und dem Zellzwischenmaterial-Flächenelement gibt. Auf die damit verbundenen Vorteile, insbesondere eine Verhinderung eines Überspringens von Spannungen zwischen Zellen oder zwischen einer Zelle und einem die Zelle umgebenden, elektrisch leitenden Element, wird hiermit noch einmal verwiesen. Insgesamt kann mit der erfindungsgemäßen Batteriezellenanordnung eine materialsparende und damit kostengünstige Herstellung erfolgen.

In einer praktischen Ausführungsform einer erfindungsgemäßen Batteriezellenanordnung ist ein umlaufender äußerer Rand der weitgehend unisolierten Seitenfläche mit einer Isolationsschicht versehen, und das Zellzwischenmaterial-Flächenelement ist derart angeordnet, dass sich ein über die weitgehend unisolierte Seitenfläche vollständig umlaufender Überlappungsbereich ergibt. Dadurch entsteht ein besonders sicherer Schutz vor einem Überspringen von Spannung, so dass hohe Durchschlagsfestigkeiten gewährleistet werden können.

Die Erfindung betrifft auch ein Verfahren zur Herstellung einer wie vorstehend beschriebenen Batteriezelle, gemäß welchem die Isolationsschicht als Lack und/oder Pulverbeschichtung aufgebracht wird. Unter einem elektrisch isolierenden Lack wird im vorliegenden Fall insbesondere ein polymerbasierter Lack verstanden oder eine entsprechend geeignete Pulverbeschichtung oder ein keramischer Lack.

Die Erfindung betrifft auch ein Verfahren zur Herstellung einer wie vorstehend beschriebenen Batteriezelle, gemäß welchem die Isolationsschicht als Folie aufgebracht wird, indem entweder auf einzelne Flächen Folienzuschnitte aufgebracht werden oder indem vier Seitenflächen mit einem zugeschnittenen Folienzuschnitt umwickelt und dadurch kontinuierlich aufgebracht werden. Das Umwickeln hat den besonderen Vorteil, dass ein weitgehend verschnittfreies Aufbringen einer Isolationsfolie auf insgesamt vier Seitenflächen erfolgen kann, so dass das zu verwendende Folienmaterial effizient eingesetzt wird. Der Vollständigkeit halber wird darauf hingewiesen, dass das Folienmaterial auch jeweils etwas breiter zugeschnitten sein kann als die vier zu beschichtenden Seitenflächen des Gehäusegrundkörpers, so dass seitlich überstehende Bereiche durch Umfalten genutzt werden können, um zwei weitere Seitenflächen mit einer umlaufenden Folienschicht entlang des äußeren umlaufenden Randes zu versehen.

Weitere praktische Ausführungsformen der Erfindung sind nachfolgend im Zusammenhang mit den Zeichnungen beschrieben. Es zeigen:
- Fig. 1: eine erste Ausführungsform einer erfindungsgemäßen Batteriezelle während der Erstellung einer Batteriezellen-Anordnung,
- Fig. 2: eine zweite Ausführungsform einer erfindungsgemäßen Batteriezelle während der Erstellung einer Batteriezellenanordnung,
- Fig. 3: eine weitere Ausführungsform einer erfindungsgemäßen Batteriezelle mit einem Zellzwischenmaterial-Flächenelement,
- Fig. 4: verschiedene Schritte eines Verfahrens zur Herstellung einer erfindungsgemäßen Batteriezelle und
- Fig. 5: eine erfindungsgemäße Batteriezellenanordnung in einem Batteriegehäuse zur Visualisierung von Luft- und Kriechstrecken in einer Batteriezellen-Anordnung.

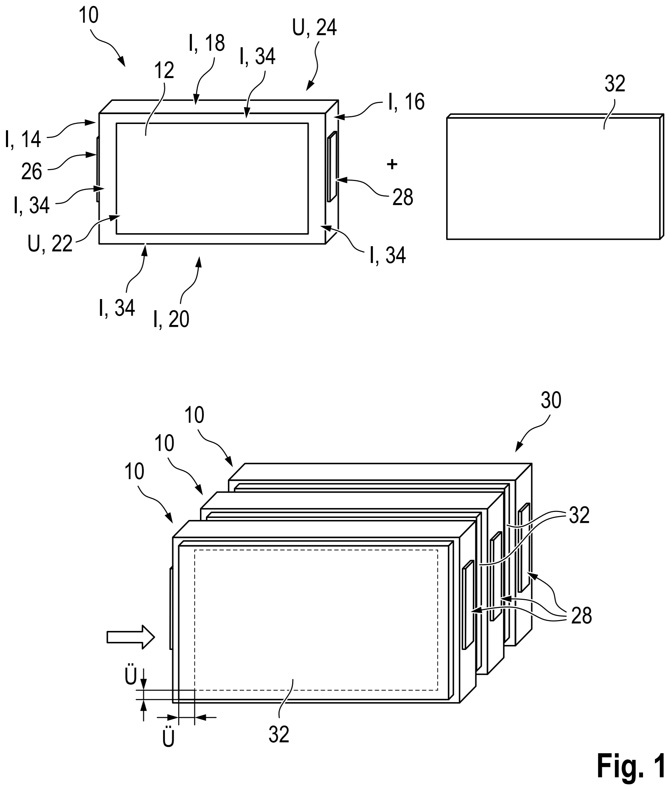

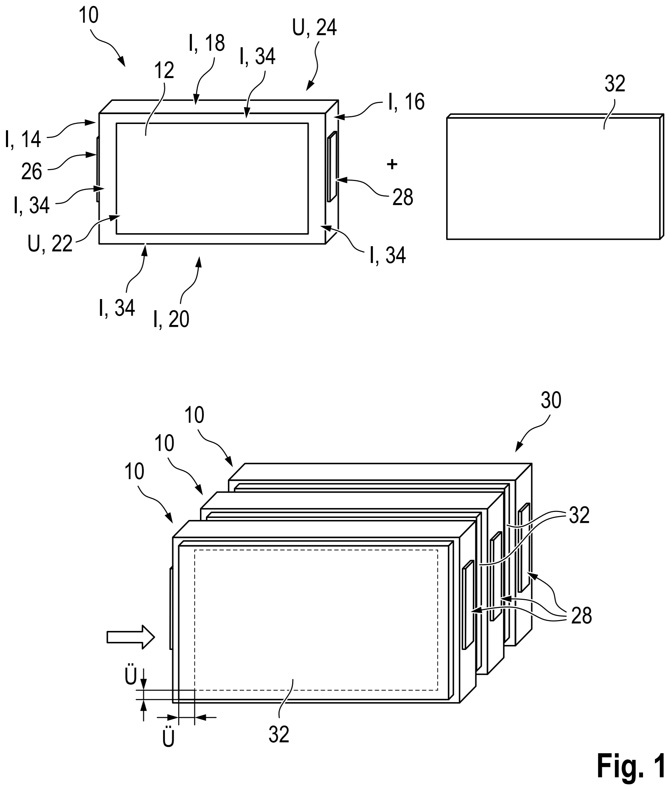

Fig.1 zeigt eine Batteriezelle 10 mit einem quaderförmigen Gehäusegrundkörper 12. Der Gehäusegrundkörper 12 weist in der gezeigten Ausführungsform vier Seitenflächen 14, 16, 18, 20 auf, welche überwiegend mit einer Isolationsschicht I versehen sind. Darüber hinaus weist der Gehäusegrundkörper 12 zwei weitere Seitenflächen 22, 24 auf, welche überwiegend unisoliert sind. Diese sind in dem unisolierten Bereich mit einem U als unisolierte (Teil-)Fläche gekennzeichnet.

An den zwei gegenüberliegenden Seitenflächen 14, 16, an welchen eine Isolationsschicht I angeordnet ist, sind Polflächen 26, 28 angeordnet.

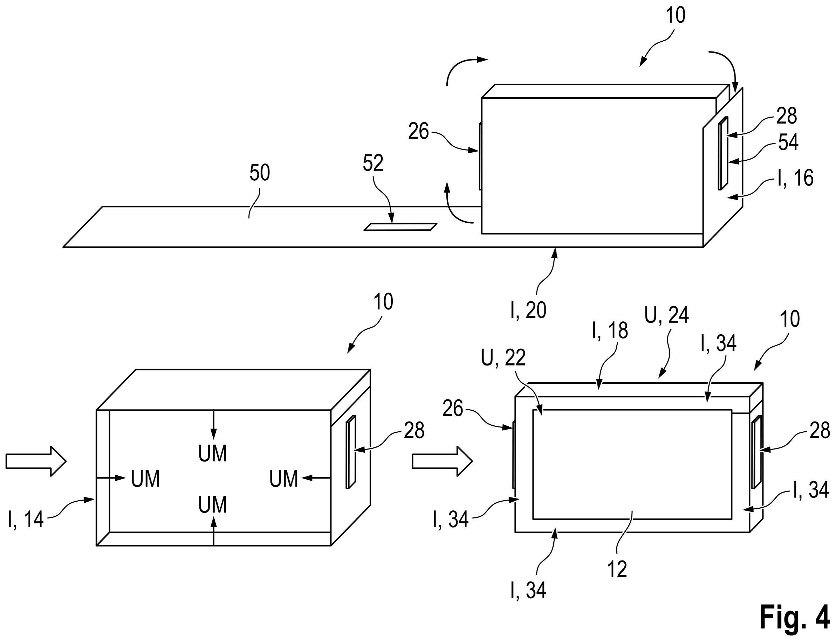

Die Isolationsschichten I sind in der ersten Ausführungsform mittels Folie (Isolationsfolie) erzeugt worden, indem geeignete Zuschnitte hergestellt und auf die jeweiligen Seitenflächen 14, 16, 18, 20, 22, 24 aufgebracht wurden. Dies kann entweder durch einzelne Streifen erfolgen oder durch einen Folienzuschnitt 50, wie im Nachfolgenden in Verbindung mit Fig. 4 noch beschrieben werden wird. Der Vollständigkeit halber wird an dieser Stelle auch bereits darauf hingewiesen, dass die Isolationsschichten I auch durch Beschichtung mittels eines Lacks oder mittels Pulverbeschichtung aufgebracht sein können.

Wie in Fig. 1 gut erkennbar ist, sind die überwiegend unisolierten Seitenflächen 22, 24 zu einem Flächenanteil von weit über 50 % nicht mit einer Isolationsschicht versehen. Vorzugsweise beträgt der Flächenanteil mehr als 70 %, weiter bevorzugt mindestens 80 %, weiter bevorzugt mindestens 90 % und besonders bevorzugt 95 % oder sogar 100 %.

Um eine erfindungsgemäße Batteriezellen-Anordnung 30 zu erzeugen, wie in Fig. 1 unten dargestellt ist, werden wechselweise ein Zellzwischenmaterial-Flächenelement 32 aus einem isolierenden Zellzwischenmaterial 32 und eine Batteriezelle 10 derart angeordnet, dass das Zellzwischenmaterial-Flächenelement 32 jeweils den überwiegend unisolierten Bereich der (großen) Seitenflächen 22, 24 vollständig derart überdeckt, dass es zu einer Überlappung Ü kommt. Um diese Überlappung Ü darzustellen, ist das Zellzwischenmaterial-Flächenelement 32 in Figur 1 und teilweise auch in den nachfolgenden Figuren teiltransparent dargestellt.

Um ein Überspringen von Spannungen von dem unisolierten Bereich des Gehäusegrundkörpers 12 auf ein anderes, elektrisch leitendes Element zu verhindern, ist die Überlappung Ü zwischen dem Zellzwischenmaterial-Flächenelement 32 und Streifen 34 einer Isolationsschicht anwendungsspezifisch ausreichend groß bemessen und ausgelegt. Wie in Figur 1 gut erkennbar ist, erstrecken sich die Überlappungen Ü in der gezeigten Ausführungsform außenseitig auf den überwiegend unisolierten Seitenflächen 22, 24 im äußeren Bereich über eine geschlossene Umfangsfläche. Die Überlappung beträgt vorzugsweise mindestens 5 mm, besonders bevorzugt mindestens 6 mm und weiter bevorzugt mindestens 8 mm oder mindestens 10 mm. Besonders bevorzugt sind Überlappungen von mindestens 12 mm oder mindestens 14 mm.

Im Folgenden werden weitere Ausführungsformen beschrieben, wobei für identische oder zumindest funktionsgleiche Elemente die gleichen Bezugszeichen wie in Fig. 1 verwendet werden. Soweit nicht anders beschrieben, sind die vorstehend beschriebenen Eigenschaften auch für die im Weiteren erläuterten Elemente gültig.

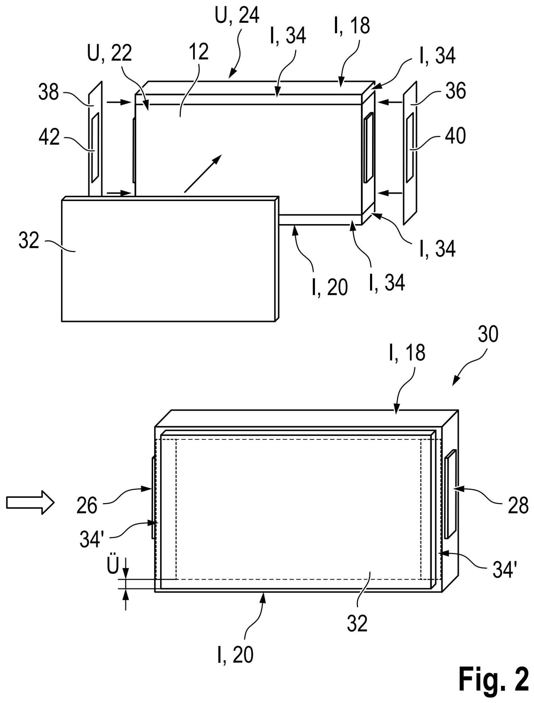

Fig. 2 zeigt eine weitere Ausführungsform in einer analogen Darstellung zu Fig. 1. Diese Ausführungsform unterscheidet sich im Wesentlichen dadurch, dass nur zwei Seitenflächen 18, 20 des Gehäusegrundkörpers 12 vollflächig mit einer Isolationsschicht I versehen sind. Dabei ist die Isolationsschicht I derart vorgesehen, dass sich diese Isolationsschicht I auch über einen jeweils schmalen angrenzenden äußeren Streifen 34 der angrenzenden Flächen 22, 24 erstreckt (vgl. Fig. 2 oben). Optional kann sich die Isolationsschicht I auch über einen jeweils schmalen Streifen 34 der angrenzenden Seitenflächen 14, 16, an welchen sich die Polflächen 26, 28 befinden, wie in Figur 2 oben dargestellt. In diesem Fall ergeben sich vollständig umlaufende schmale Streifen 34, die sich über alle Seitenflächen 14, 16, 22, 24 erstrecken, die jeweils an die obere Seitenfläche 18 und die untere Seitenfläche 20 angrenzen.

Alternativ oder in Ergänzung können die Seitenflächen 14, 16, an welchen die Polflächen 26, 28 angeordnet sind, sind in der gezeigten Ausführungsform mit Hilfe separater Abdeckungen 36, 38 abgedeckt. Bei diesen Abdeckungen 36, 38 handelt es sich insbesondere um KunststoffAbdeckungen, welche im Bereich der Polflächen 26, 28 entsprechende Ausnehmungen 40, 42 aufweisen. Die Abdeckungen 36, 38 stellen bereits eine Isolationsfunktion bereit, so dass die Seitenflächen 14, 16 nicht mit einer zusätzlichen Isolationsschicht I versehen werden müssen.

Zur Herstellung einer erfindungsgemäßen Batteriezellen-Anordnung 30 wird wiederum ein Zellzwischenmaterial-Flächenelement 32 derart angeordnet, dass die weitgehend unisolierte Seitenfläche 22 mit dem Zellzwischenmaterial-Flächenelement 32 derart bedeckt wird, dass es zu einer Überlappung Ü in den oberen und unteren Bereich kommt.

Optional kann in Hochrichtung ein zusätzlicher Streifen 34' mit einer Isolationsschicht I vorgesehen sein, wenn in Richtung der Pfeile S ein Überspringen von Spannung zusätzlich verhindert werden muss.

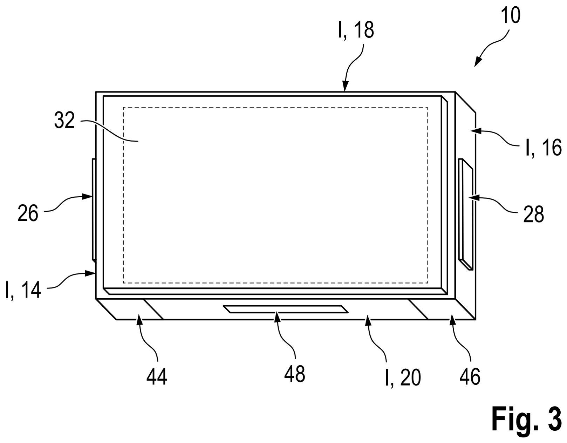

Fig. 3 zeigt eine weitere Ausführungsform einer erfindungsgemäßen Batteriezelle 10. Diese Ausführungsform entspricht im Wesentlichen der in Fig. 1 gezeigten Ausführungsform mit dem Unterschied, dass zusätzlich Isolationsausschnitte 44, 46, 48 vorgesehen sind, wobei die Isolationsausschnitte 44, 46 für Klebeflächen vorgesehen sind und der Isolationsausschnitt 48 für ein nicht dargestelltes Berstelement vorgesehen ist.

Fig. 4 zeigt verschiedene Schritte eines Verfahrens zur Herstellung einer Batteriezelle 10, bei welcher die Isolationsschicht I als Folie aufgebracht wird, indem ein einzelner Folienzuschnitt 50 hergestellt wird, welcher anschließend durch Umwickeln der Seitenflächen 16, 20, 14, 18 aufgebracht wird. Wie in Fig. 4 oben erkennbar, weist der Folienzuschnitt 50 bereits Isolationsausschnitte 52, 54 für die Polflächen 26, 28 auf. Nach dem Umwickeln mit dem Folienzuschnitt 50 ist eine sich über den Seitenflächen 14, 16, 18, 20 erstreckende, geschlossene Umfangsfläche mit der Isolationsschicht I versehen.

Wie sich aus der Darstellung von Fig. 4 ergibt, wird der Folienzuschnitt 50 umlaufend auf die Seitenflächen 16, 20, 14, 18 aufgebracht. Dabei ist der Folienzuschnitt 50 so bemaßt, dass sich ein seitlicher Überstand ergibt. Der seitliche Überstand wird gemäß den Pfeilen UM in Fig. 4 anschließend umgeschlagen, um die in Fig. 4 rechts unten erkennbaren außenseitig angeordneten Streifen 34 einer Isolationsschicht I auf den überwiegend unisolierten Seitenflächen U, 22 und U, 24 zu erzeugen.

Der Vollständigkeit halber wird darauf hingewiesen, dass der Folienzuschnitt 50 prozessual auch erst nach dem Umwickeln abgelängt werden kann, so dass von einer Endlos-Folienbahn oder einer Folienrolle Material abgewickelt werden kann, bis die vier Seitenflächen 16, 20, 14, 18 umwickelt sind, um anschließend durch Abtrennen der Folie die passende Länge zu erzeugen.

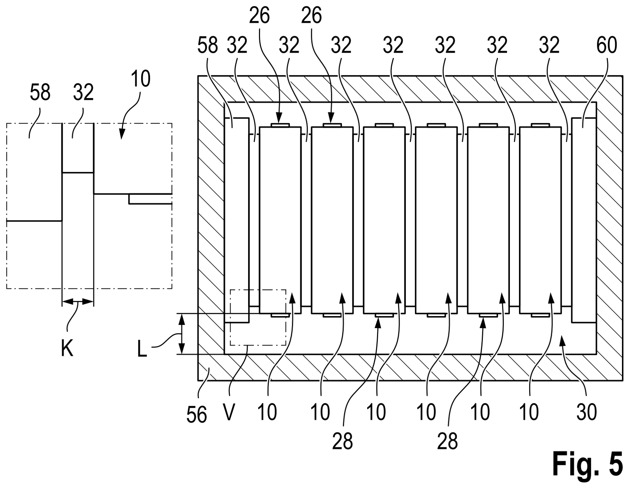

Fig. 5 zeigt eine erfindungsgemäße Batteriezellen-Anordnung 30 in einem Batteriegehäuse 56. Innerhalb des Batteriegehäuses 56 sind zwischen Spannplatten 58, 60 eine Vielzahl von Zellzwischenmaterial-Flächenelementen 32 und Batteriezellen 10 in Reihe angeordnet. Der mit V gekennzeichnete Bereich ist links neben der Darstellung noch einmal vergrößert dargestellt. In dieser vergrößerten Darstellung des Bereichs V ist erkennbar, dass zwischen der äußersten Batteriezelle 10 und der Spannplatte 58 eine Kriechstrecke K vorgesehen ist, in welcher verhindert werden muss, dass es zu einem Überschlagen der Spannung von der Batteriezelle 10 zu der Spannplatte 58 kommt.

Analog dazu ist mit dem Doppelpfeil eine Luftstrecke L gekennzeichnet, welche sich zwischen der Batteriezelle 10 und der nächstkommenden Innenwand des Gehäuses 56 ergibt, über welche ebenfalls ein Überschlagen der Spannung von der Batteriezelle 10 vermieden werden muss. Um das Überschlagen der Spannung auf Kriechstrecken K und Luftstrecken L zu vermeiden, muss eine ausreichende Überlappung Ü zwischen dem Zellzwischenmaterial-Flächenelement 32 und den jeweils anliegenden Flächen mit Isolationsschicht I vorgesehen sein.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung kann im Rahmen der Ansprüche und unter Berücksichtigung der Kenntnisse des zuständigen Fachmanns variiert werden.

### Bezugszeichenliste

- 10: Batteriezelle
- 12: Gehäusegrundkörper
- 14: Seitenfläche
- 16: Seitenfläche
- 18: Seitenfläche
- 20: Seitenfläche
- 22: Seitenfläche
- 24: Seitenfläche
- 26: Polfläche
- 28: Polfläche
- 30: Batteriezellen-Anordnung
- 32: Zellzwischenmaterial-Flächenelement
- 34: Steifen
- 34': Streifen
- 36: Abdeckung
- 38: Abdeckung
- 40: Ausnehmung
- 42: Ausnehmung
- 44: Isolationsausschnitt
- 46: Isolationsausschnitt
- 48: Isolationsausschnitt
- 50: Folienzuschnitt
- 52: Isolationsausschnitt
- 54: Isolationsausschnitt
- 56: Batteriegehäuse
- 58: Spannplatte
- 60: Spannplatte
- I: Isolationsschicht
- K: Kriechstrecke
- L: Luftstrecke
- S: Pfeil
- U: unisolierte Fläche
- UM: Pfeil
- Ü: Überlappung
- V: Bereich

## Patentansprüche

1. Batteriezelle (10) mit einem quaderförmigen Gehäusegrundkörper (12), welcher sechs Seitenflächen (14, 16, 18, 20, 22, 24) aufweist,
**dadurch gekennzeichnet,**
**dass** zwei bis vier Seitenflächen (14, 16, 18, 20) der sechs Seitenflächen (14, 16, 18, 20, 22, 24) des Gehäusegrundkörpers (12) zumindest überwiegend mit einer Isolationsschicht (I) versehen sind, während mindestens zwei Seitenflächen (18, 20) der sechs Seitenflächen (14, 16, 18, 20, 22, 24) des Gehäusegrundkörpers (12) überwiegend unisoliert sind.

2. Batteriezelle (10) nach dem vorstehenden Anspruch, **dadurch gekennzeichnet, dass** an ein oder zwei Seitenflächen (14, 16) des Gehäusegrundkörpers (12) Polflächen (26, 28) angeordnet sind und zumindest zwei andere Seitenflächen (18, 20) weitgehend mit einer Isolationsschicht (I) versehen sind.

3. Batteriezelle (10) nach einem der vorstehenden Ansprüche, **dadurch gekennzeichnet, dass** vier aneinander angrenzende Seitenflächen (14, 16, 18, 20), die überwiegend mit einer Isolationsschicht (I) versehen sind, entlang eines Umfangs des Gehäusegrundkörpers (12) vorgesehen sind.

4. Batteriezelle (10) nach einem der vorstehenden Ansprüche, **dadurch gekennzeichnet, dass** die Seitenflächen (14, 16, 18, 20), welche überwiegend mit einer Isolationsschicht (I) versehen sind, an den Seiten des Gehäusegrundkörpers (12) angeordnet sind, welche gegenüber den verbleibenden Seiten eine kleinere Fläche aufweisen.

5. Batteriezelle (10) nach einem der vorstehenden Ansprüche, **dadurch gekennzeichnet, dass** an den weitgehend unisolierten Flächen (U, 22, U, 24) mindestens zwei außenseitig angeordnete Streifen (34) mit einer Isolationsschicht (I) versehen sind.

6. Batteriezelle (10) nach einem der vorstehenden Ansprüche, **dadurch gekennzeichnet, dass** mindestens eine Isolationsschicht (I) einen Isolations-Ausschnitt (44, 46, 48, 52, 54) aufweist.

7. Batteriezellen-Anordnung (30) mit mindestens einer Batteriezelle (10) nach einem der Ansprüche 1-6, wobei unmittelbar an eine überwiegend unisolierte Seitenfläche (U, 22, U, 24) angrenzend ein Zellzwischenmaterial-Flächenelement (32) aus einem isolierenden Zellzwischenmaterial derart angeordnet ist, dass die weitgehend unisolierte Seitenfläche (U, 22, U, 24) von dem Zellzwischenmaterial-Flächenelement (32) vollständig überdeckt ist und/oder es einen Überlappungsbereich (Ü) zwischen einer an der Seitenfläche (U, 22, U, 24) angeordneten Isolationsschicht (I) und dem Zellzwischenmaterial-Flächenelement (32) gibt.

8. Batteriezellen-Anordnung (30) nach dem vorstehenden Anspruch, **dadurch gekennzeichnet, dass** ein umlaufender äußerer Rand der weitgehend unisolierten Seitenfläche (U, 22, U, 24) mit einer Isolationsschicht (I) versehen ist und das Zellzwischenmaterial-Flächenelement (32) derart angeordnet ist, dass sich ein über die weitgehend unisolierte Seitenfläche (U, 22, U, 24) vollständig umlaufender Überlappungsbereich (Ü) ergibt.

9. Verfahren zur Herstellung einer Batteriezelle (10) nach einem der Ansprüche 1-6, **dadurch gekennzeichnet, dass** die Isolationsschicht (I) als Lack und/oder Pulverbeschichtung aufgebracht wird.

10. Verfahren zur Herstellung einer Batteriezelle (10) nach einem der Ansprüche 1-6, **dadurch gekennzeichnet, dass** die Isolationsschicht (I) als Folie aufgebracht wird, indem entweder auf einzelne Flächen Folienzuschnitte (50) aufgebracht werden oder indem vier Seitenflächen mit einem Folienzuschnitt (50) umwickelt und dadurch kontinuierlich aufgebracht werden.
